# EUROPEAN PATENT APPLICATION

(11) **EP 2 138 124 A1**
(43) Date of publication of application: **30.12.2009**
(21) Application number: 07858265.7
(22) Date of filing: 29.11.2007
(51) Int. Cl.: A61C 7/00, A61C 7/08, A61C 7/12

(54) **PREFABRICATED ELEMENTS APPLICABLE IN A SYSTEM OF FERRULES FOR CORRECTING ORTHODONTIC MALOCCLUSIONS**

(30) Priority: 30.11.2006 ES 200603070
(71) Applicant: Duran Von Arx, Josep, 08007 Barcelona (ES)
(72) Inventor: Duran Von Arx, Josep, 08007 Barcelona (ES)
(86) International application number: PCT/ES2007/000689
(87) International publication number: WO 2008/065226

(57) **Abstract**

PREFABRICATED ELEMENTS FOR APPLICATION IN A SPLINTS SYSTEM FOR CORRECTING MALOCCLUSIONS IN ORTHODONTICS, constituted by a wire with a central part (4) that may have protuberances (8), loops (9) and/or creases (10), and undulated retention areas (5) and (6) or plates (11) and triangles (12) which may come in different shapes and be formed by one, two or four parts joined by a mechanism (7), depending on the type and function of each one; which are built into appliances and have predetermined active or passive effects built into them it and are permanently cemented inside the mouth; these are used in combination with transparent splints (2) which are rigid or semi-rigid and removable or cemented, complete (2a), partial (2b), or individual (2c), and with working platforms (3) that are designed in each case with different shapes and positions, in the working models.

## Description

### PURPOSE OF THE INVENTION

As expressed in the title of this descriptive brief, the invention refers to a set of prefabricated elements for application in a splints system for correcting malocclusion in orthodontics, adding a series of advantages and innovative features to the function for which they are intended, which will be described in detail later in this document, and offering an alternative and/or improvement to the applications already known in this field.

More specifically, the purpose of the invention consists of a working system for correcting malocclusion in orthodontics, through the use of splints, fixed or moveable appliances that have the innovative function of incorporating a series of prefabricated active or passive elements which predetermine the movements to be made by the teeth, thereby facilitating the effect of the appliance and the precision of the forces applied.

### FIELD OF APPLICATION

The field of application of the present invention is the dentistry field and in particular, the orthodontics field.

### BACKGROUND TO THE INVENTION

At present, as a reference to the state of the art, it should be said that there are different mechanical systems available for moving teeth in orthodontics.

On one hand, there are fixed appliances, that are vestibular (outside the teeth) and/or lingual (inside the teeth) which act by exerting pressure through wires on brackets cemented to the teeth. On the other hand, there are moveable appliances (which can be "removed") and several fixed appliances that permit orthopaedic effects to be made on the bone, and in particular, for remodelling the shape of the dental arches, by widening them or correcting them in a vertical and forwards and backwards direction.

Recently, treatment systems have emerged based on the use of elastic or semi-rigid, transparent splints that cause the teeth to move by means of exerting pressure on them, after being fitted on the teeth. These are active splints, unlike what is proposed in the working system described in the present invention.

On the other hand, we should mention that the systems referred to and known to date have a series of disadvantages and aspects that can be improved on, such as the difficulty in making the appliances and the precision of the forces to be applied, their unattractive appearance, the fact that since the patient can remove them, or that they could be lost, etc. The purpose of the present invention is to create a system that will provide practical, effective solutions to these problems. It should be said that the applicant is not aware of the existence of any prefabricated elements for application in a splints system for correcting malocclusion in orthodontics with similar technical, structural and constitutional characteristics.

### EXPLANATION OF THE INVENTION

Thus, the system proposed by the invention is unlike other systems currently in use, since it is an aesthetic treatment system based on the use of splints that are partly transparent and a set of acrylic working platforms, which are known elements, and not so much the components that cause the corrective movements of the teeth, as these are passive, but provide stability to the appliance and enable it to be properly anchored on the teeth, as well as the connection of the different active elements of the appliance to the teeth or groups of teeth.

In turn the prefabricated elements characterising the invention that are applicable to the new system, which may be active or passive, enable the biomechanical planning of the appliance, and are responsible for the orthopaedic and dental changes achieved, which thanks to their prefabricated nature, make it possible to predetermine the forces to be applied to the teeth and, therefore, the pressure exerted on the surfaces of the teeth roots, thereby introducing a beneficial biological control into the appliance.

Specifically the prefabricated elements applicable to the splints system for correcting malocclusion in orthodontics that is proposed in the invention are manufactured based on the following criteria:
The (correctional) changes are introduced into the working models on the teeth that are to be moved. That procedure is known as the "set-up" or predetermination on the models, and then the corrective appliance is built onto them.
The corrective appliance, constructed based on the "set-up" of the models, is placed in a fixed position (cemented) on the teeth of the patient, by a set of retention elements, the splints, which are made of thermo-mouldable materials that may be rigid or semi-rigid and a set of acrylic blocks of "working platforms" to which the working elements of the appliance are connected.
The platforms are made of acrylic and enable several active or passive working elements to be retained. In turn, these working elements are prefabricated and as already described, may be passive or active, depending on the functions they have to perform.
Thus, the prefabricated passive elements are rigid and prevent all movement in the areas in which they are fixed, whereas the prefabricated active working elements are elastic and have a shape memory, being responsible for the dental movements to be made by the appliance. Both are made in different shapes and in different sizes, as required, using metal or non-metal materials.
The movements of the teeth made previously with the models must be executed clinically, in the mouth, by means of the action of the prefabricated active working elements.
The root surfaces (teeth roots) that are to be moved are calculated and, depending on the optimum pressure to be applied to the root surfaces, the force that must be applied using the appliance is calculated, taking into account that the force to be applied (grams) will be the result of what is produced by the pressure (grams/square centimetre) multiplied by the surface of the teeth that are to be moved (square centimetres).

Having calculated the necessary force that is to be applied to each tooth or group of teeth, the degree of deformation of the wire to be used is determined, and based on this, the shape and size (thickness) of the active working element is selected.

After making these calculations, the appliance is made in the laboratory and then placed in the patient's mouth, and the retention elements or splints are cemented to the respective teeth.

The work performed by the appliance is carried out more easily and automatically in the mouth, without the need for a specialist to intervene, thereby simplifying the work of the professional and allowing the patient to make less frequent visits.

In short, the system uses a series of appliances with predetermined effects that have been built into them, that are cemented permanently inside the mouth. The appliances are made with the prefabricated elements forming part of the invention, which are active and passive elements with different shapes, depending on their position and the effect they are intended to obtain. These are used together with transparent splints made of rigid or semi-rigid materials that can be thermo-shaped, and then placed in the patient's mouth as moveable or cemented appliances. They may encompass a whole arch (in which case they are known as complete splints), a group of teeth (partial splints) or just one tooth (individual splints), and have acrylic blocks or platforms which in turn, are adhered to a splint or the palate or lingual area in the mouth, and are, in each case, designed with different shapes and positions in the working models, depending on the strategy and/or handling or work to be executed by each professional or laboratory.

It should be mentioned that the prefabricated passive elements will be made of rigid materials, in order to enable them to effectively perform their functions: keeping, fixing or retaining the original position of a structure or splinting different structures together, while the prefabricated active elements will be made of elastic materials (so that a light force can be applied to the teeth), preferably with a "shape memory" (to maintain their mechanical effect constant) and may or may not be made of metal.

The prefabricated elements of the invention may have different shapes, and with respect to their size, they may come in a different range of widths and lengths, so that they can be fitted to any dental arch or position of the teeth that are to be corrected. On the other hand, these prefabricated elements also have different thicknesses, to permit the correct forces to be selected, depending on the necessary deformation of the wire in the mouth and the surface of the teeth to be moved.

Finally we should say that the prefabricated elements for application in the splints system of this patent have a basic predetermined design and, as we have already said, may be made of different materials, both rigid and elastic materials that are biologically compatible, with each other. Depending on their functions, they are divided into two groups:
- Prefabricated stabiliser elements or passive connectors, made of a rigid, biocompatible material, which have the basic function of maintaining or fixing the position of the transparent splints and/or the acrylic blocks or "working platforms" among which are the following variations:

Passive transversal connectors between different partial hemi-arch splints (sides) that are fixed to the internal sides of the respective partial splints, either at the front or back of them, and which can be classified based on the location of their functions at the level of the dental arch, and their use in the upper or lower arch of the mouth, into: upper and front, upper and back, lower and front or lower and back, all having different designs.

Passive joining connectors placed between the hemi-splints and "working platforms", which are used to join these elements together and provide greater stability to the whole appliance.

Passive connectors placed between the front and back, to fix different individual and/or partial splints together or to the working platforms.
- And Prefabricated active elements which are used to correct orthopaedic and dental problems in each specific case, and can, in turn, be classified as follows:
   Those having an effect as a block on several teeth, i.e., causing movements of groups of teeth that are splinted together by partial splints "as a block" and those which are in turn divided up into different types, depending on their function: for expanding or contracting the arches, acting by exerting transversal force on the sides of the arches, and which may be upper or lower and front ones, with different designs, or back ones with different designs, for intruding or extruding the side areas, acting by exerting a vertical force on the side areas and may be for the front or back, or used for correcting problems at the front or back (type II or III malocclusions) by means of applying the forces in this direction. These prefabricated elements may be specially designed to correct such problems.

Those in which effect is limited to movements between partial and individual splints, which, depending on their function in treatment, will be: for opening up spaces, closing spaces or vertical levelling, all of which have different designs.

And those with a single or individual effect on one tooth, that are fixed on the "working platforms" or on the partial splints, to generate force on one tooth through an individual splint that is specifically fitted or cemented to that tooth. The variations in the design of this type of prefabricated element range from a simple undulated and/or straight wire to more complex shapes.

The new prefabricated elements for application in a splints system for correcting malocclusions in orthodontics therefore represent an innovative structure with structural and constitutional characteristics that are hitherto unknown with respect to this use, and these reasons, together with their practicality, make them sufficiently valid to obtain the privilege of exclusivity that is being sought.

### DESCRIPTION OF THE FIGURES

To complete the description given here, and for the purpose of helping readers to better understand the characteristics of the invention, a set of figures is attached to the present descriptive brief, as an inseparable part thereof, showing the following, for illustrative purposes, without being limitative in any way:
Figure number 1.- This shows a diagrammatic plan view of an example of a splints system for correcting malocclusions in orthodontics, in which the prefabricated elements described in the invention are applied, with the principal elements forming it, and their shape and lay-out.
Figures 2 and 3.- These show another two examples of appliances including the new system in which the shape of a complete splint and a partial and individual splint, respectively, can be seen, associated with different prefabricated elements.
Figures 4 to 11.- These figures show different variations of the prefabricated elements, passive transversal elements in different shapes, depending on the position for which they are intended, and figures 4 to 8 show the different potential types of upper and lower transversal elements. Figures 9 to 11 show examples of upper and back, lower and front, and lower and back passive transversal elements, respectively.
Figures 12 to 14.- These show examples of prefabricated passive connecting elements for joining the splints, and working platforms, of the front-back and horizontal type.
Figures 15 to 21.- These show examples of the different types of prefabricated active expanding elements.
Figures 22 and 23.- These show examples of prefabricated active elements for upper front and back contraction, respectively.
Figures 24 and 25.- These show examples of prefabricated active intruding or extruding elements.
Figures 26 to 29.- These show different examples of prefabricated active elements for type II corrections and type III corrections.
Figures 30 to 32.- These show different examples of prefabricated active elements for opening and closing spaces.
Figures 33 to 36.- These show examples of prefabricated active elements exerting single effects from a working platform on individual teeth or a group of teeth.

### PREFERENTIAL USE OF THE INVENTION

In view of the above-referred figures and based on the numbering used, we can see an example of how the new prefabricated elements can be used as part of a splints system for correcting malocclusions in orthodontics, in which the numbers assigned to each figure correspond to the parts indicated below:
(1) prefabricated elements
(1a) prefabricated passive elements
(1 b) prefabricated active elements
(2) splints
(2a) complete splints
(2b) partial splints
(2c) individual splints
(3) working platforms
(4) smooth part of the prefabricated element
(5) undulated retention or sinuous part of the prefabricated element for anchoring to the splints
(6) undulated retention or sinuous part of the prefabricated element for anchoring to the working platform
(7) anchoring mechanism between prefabricated elements
(8) protuberance in the smooth part of the prefabricated element
(9) circular loop of the prefabricated element
(10) vertical crease with loop in the smooth part of the prefabricated element
(11) retention plate of the prefabricated element
(12) retention triangle of the prefabricated element.

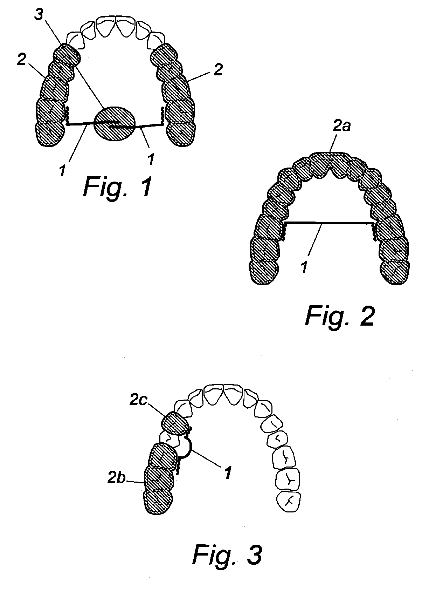

Thus, as can be seen in figures 1 to 3, the invention consists of a set of prefabricated elements (1) formed by a long body or wire that is inserted into appliances with predetermined inbuilt effects, that are cemented permanently inside the mouth. These prefabricated elements (1) may be both active and passive, with different shapes depending on the position in which they are to be used and the effect that they are expected to obtain, and may be used in conjunction with transparent splints (2) made of rigid or semi-rigid materials that can be thermo-shaped, which can be placed in the patient's mouth as a moveable or cemented appliance. They may be complete splints (2a), covering a whole arch, such as the example shown in figure 2, partial splints (2b), covering a group of teeth or individual teeth (2c), and affecting just one tooth (figure 3), and with acrylic blocks or working platforms (3), which in turn may be adhered to a splint or the palate or lingual area of the mouth and are designed, in each case, in different shapes and positions, in the working models.

In turn, the prefabricated elements (1) are essentially formed by a long body or wire with a round or rectangular cross-section that has a smooth central part (4) and end parts that are sinuous or undulated, and act as retainers (5) and (6) for the splints (2) and the working platforms (3) respectively, which serve as retainers (anchors) for the lateral partial splints (2b) during the process of manufacturing or making the appliance.

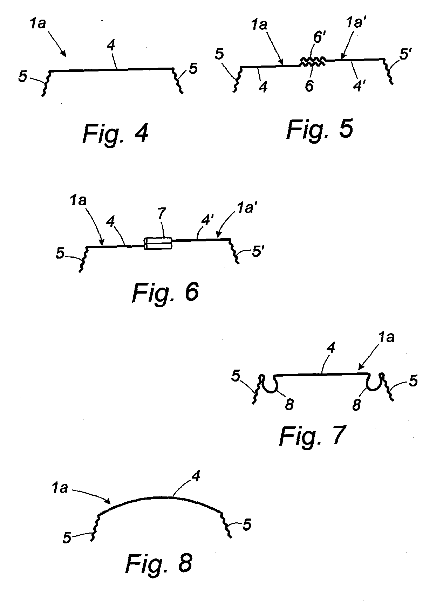

Those elements (1) have different shapes, depending on their function and/or position, and may be of different sizes and come in different widths and lengths for fitting to dental arches of all shapes or any position in the teeth that are to be corrected and in different thicknesses, making it possible to select the ideal force that is to be exerted, based on the necessary deformation of the wire in the mouth, in accordance with those functions. These are divided up into prefabricated passive elements (1 a) and active elements (1b):
In this way, figures 4 to 14 show different examples of the types of prefabricated stabilising elements or passive connectors (1a) which may be made of a metallic or non-metallic rigid, biocompatible material and have the basic function of maintaining or fixing the position of the transparent splints (2) and/or acrylic blocks or "working platforms" (3). These in turn can be divided into the following types:
   Transversal passive connectors (1a), (figures 4 to 11) placed between partial splints (2b) in hemi-arches (different sides) that are anchored to the inner sides of the respective partial splints (2b) or to the front or back sides of them.

With regard to the prefabricated elements constituted by the transversal passive connectors (1a), the invention provides for different types, which may be as follows: lineal, formed by just one part (1a) with a smooth, central, straight part (4), (figure 4); formed by two parts (1 a) and (1a') joined to each other at the undulated retention areas (6) and (6') respectively, by system based on a cemented working platform (3) (figure 5), or based on an anchoring mechanism (7) comprised of two tubes that allow those ends to be inserted inside and joined by being flattened (figure 6); with undulated elements (8), (figure 7); all of which have a central, smooth, curved part (4), such as the example of the single part shown in figure 8.

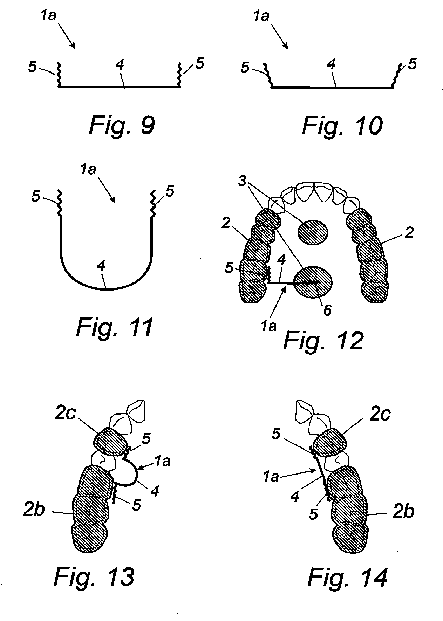

On the other hand, depending on the location of their functions in the dental arch, and their use in the upper or lower arch of the mouth, each of the different types described will change the position and inclination or opening angle of the retention areas (5), as can be seen in figures 4 to 8 which show example of prefabricated passive transversal connector elements (1a) in the upper and lower part of the mouth, figure 9, showing an example of upper and back elements and figure 10 showing an example of lower and front elements and figure 11 showing an example of lower and back elements.

Figure 12 shows an example of a prefabricated passive connector element (1a) for connecting hemi-splints (2b) and working platforms (3), which are used to join those elements together and add greater stability to the whole appliance. The central area (4) has an angle that is appropriate for enabling the undulated retention part (5) to be anchored to the splint and the opposite area (6) to the working platform (3).

Figures 13 and 14 show examples of passive connectors (1a) that from front to back and horizontal, respectively, which anchor different individual splints (2c) and/or partial splints (2b) to each other or to the working platforms (3), splinting those elements and adding stability to the whole appliance.

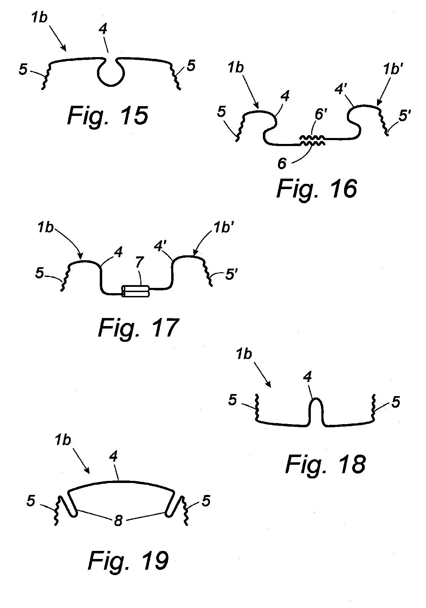

In turn, the prefabricated active elements (1b) shown in figures 15 to 36 are used to correct orthopaedic and dental problems in each case, and are made of an elastic material with a memory that may or may be made of metal, and also consist of a central part (4) on which there are protuberances (8), loops (9) and creases with loops (10), and undulated retention areas (5) and (6) at the ends or plates (11) and retention triangles (12), each one being of a different type and having a different function.

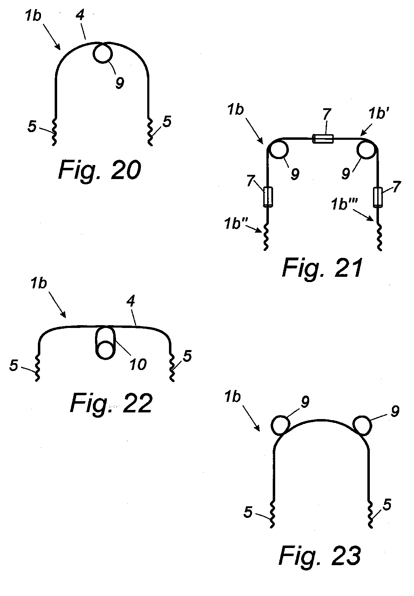

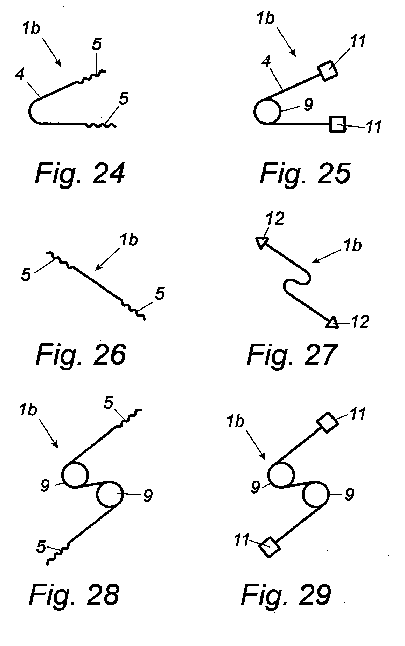

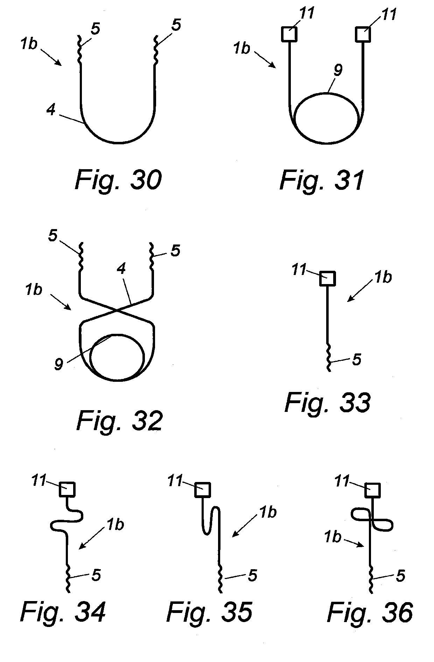

Thus, the prefabricated active elements (1b) may act as a block on several teeth, i.e., cause movements "as a block" on groups of teeth that are splinted together by a series of partial splints (2b), and may in turn consist of different types, depending on the function of each:
For expanding or contracting the arches, by exerting transversal forces on the sides of the arches. They may be upper or lower and front elements, with different designs, or back elements with different designs, as shown in figures 15 to 23. In addition the invention includes variations of these, which are described in the case of passive, lineal or curved elements, consisting of one part (figure 15) or two parts (1b) and (1 b'), connected by cementing the retention areas (6) and (6'), (figure 16), or using an anchoring mechanism (7) (figure 17), with curved shapes at the central part (4) and protuberances (8) or circular loops (9) (figures 18 to 20), and may even be formed by four parts (1b), (1b'), (1b") and (1b''') that are joined together by their respective anchoring mechanisms (7), as can be observed in the example in figure 21.
For intruding or extruding the lateral sections, acting through a vertical force that is applied on the lateral sectors, which may be front or back elements, with, for example, the central part (4) in a V shape with or without a loop (9) and with undulated external retention areas (5) or plates (11), as can be seen in the examples in figures 24 and 25.
Or for correcting problems at the front and back, type II malocclusions, for example, with a lineal central area (4) and undulated retention areas (5) or triangles (12) (figures 26 and 27) or type III with the central part (4) in the shape of an S and a double circular loop (9) and with undulated retention areas (5) or plates (11) (figures 28 and 29) by means of applying forces in that direction. These prefabricated elements may have a special design for correcting that type of problem.
With an effect that is limited to movements between partial and individual splints, which, depending on their function in the treatment, may be: for opening up spaces, closing spaces or for vertical levelling, all of which have different designs such as those shown in figures 30 to 32.
And lastly, elements with a single or individual effect on a tooth, which are anchored to the "working platforms" or on the partial splints, on one hand, to exert force on one tooth, through an individual splint that is properly fitted or cemented to the same. The different types of design for this type of prefabricated element range from a simple undulated wire (not straight) to more complex shapes as shown in the examples given in figures 33 to 36.
Having described in sufficient detail the nature of the present invention and the way it is put into practice, it is not considered necessary to enter into further enlargements on explaining it, since any expert on the subject will understand its scope and the benefits that it brings, and it is recorded that, in essence, it can be applied for other uses that differ from the use indicated by way of example. Such uses will also be covered by the protection being sought, provided that this does not lead to its fundamental principle being altered, changed or modified.

## Claims

1. PREFABRICATED ELEMENTS FOR APPLICATION IN A SPLINTS SYSTEM FOR CORRECTING MALOCCLUSIONS IN ORTHODONTICS, of a type that uses transparent splints (2) made of rigid or semi-rigid materials which can be thermo-shaped that are then placed in the patient's mouth and a set of acrylic blocks or working platforms (3) anchored to a splint (2) or the palate or lingual part of the mouth, **characterised by** the fact that they consist of a long body or wire that is built into an appliance or appliances with predetermined effects built into them, and are cemented permanently inside the mouth; in which those prefabricated elements (1) may be both active or passive, and have different shapes, depending on the function of the position in which they are to be used and the effect they are intended to produce, for use in combination with transparent splints (2) made of rigid or semi-rigid materials that can be thermo-shaped and then be placed in the patient's mouth as a removable or cemented appliance, and which may be complete splints (2a), encompassing a whole arch, partial splints (2b), encompassing a group of teeth or individual splints (2c), affecting just one tooth, and with acrylic blocks or working platforms (3) designed, in each case, in different shapes and positions, in the working models.

2. PREFABRICATED ELEMENTS FOR APPLICATION IN A SPLINTS SYSTEM FOR CORRECTING MALOCCLUSIONS IN ORTHODONTICS, based on claim 1, **characterised by** the fact that the prefabricated elements (1) consist of a long body or wire with a round or rectangular cross-section that has a smooth central part (4) that may be straight, curved or have protuberances (8), circular loops (9) and/or creases with a loop (10) and external areas that are sinuous or undulated, for retaining (5) and (6) on the splints (2) and working platforms (3) respectively, during the process of manufacturing or making the appliance, or retention plates (11) and triangles (12), depending on the type and function of each one.

3. PREFABRICATED ELEMENTS FOR APPLICATION IN A SPLINTS SYSTEM FOR CORRECTING MALOCCLUSIONS IN ORTHODONTICS, based on claims 1 and 2, **characterised by** the fact that the prefabricated elements (1) have a basic predetermined design and, depending on their functions, are divided up into prefabricated passive elements (1a), made of a rigid, biocompatible material that may or may not be metal, that maintain or fix the position of the splints (2) and/or the working platforms (3), and prefabricated active elements (1b), shaped in an elastic material with a memory, that may be metallic or non-metallic and are the elements that will be used to correct the orthopaedic and dental problems in each case.

4. PREFABRICATED ELEMENTS FOR APPLICATION IN A SPLINTS SYSTEM FOR CORRECTING MALOCCLUSIONS IN ORTHODONTICS, based on claims 1 to 3, **characterised by** the fact that one example of use of the prefabricated elements (1) may be constituted by their consisting of two parts (1a) and (1a') that are joined together in the undulated retention areas (6) and (6') respectively, by means of being cemented to a working platform (3).

5. PREFABRICATED ELEMENTS FOR APPLICATION IN A SPLINTS SYSTEM FOR CORRECTING MALOCCLUSIONS IN ORTHODONTICS, based on claims 1 to 4, **characterised by** the fact that another example of use of the prefabricated elements (1) may be constituted by their consisting of two parts (1a) and (1a') that are joined together by an anchoring mechanism (7) formed by two tubes that allow those ends to be inserted inside and then joined by flattening.

6. PREFABRICATED ELEMENTS FOR APPLICATION IN A SPLINTS SYSTEM FOR CORRECTING MALOCCLUSIONS IN ORTHODONTICS, based on claims 1 to 4, **characterised by** the fact that another example of use of the prefabricated elements (1) may be constituted by their consisting of four parts (1b), (1b'), (1b") and (1b''') that are joined together by their respective anchoring mechanisms (7).
